# EUROPÄISCHE PATENTSCHRIFT

(11) **EP 1 972 838 B1**
(45) Veröffentlichungstag und Bekanntmachung des Hinweises auf die Patenterteilung: **12.01.2011**
(21) Anmeldenummer: 08153060.2
(22) Anmeldetag: 20.03.2008
(51) Int. Cl.: F16K 11/07, F16K 11/22

(54) **Schieberventil mit mechanischen Koppelmitteln zum Übertragen der Betätigungskraft zwischen Ventilschiebern**
Sliding valve with mechanical coupling devices for transferring operating force between the sliding valves
Vanne à coulisse dotée d'éléments de couplage mécanique destiné à la transmission de la force d'actionnement entre les vannes à coulisse

(30) Priorität: 22.03.2007 DE 102007013777
(43) Veröffentlichungstag der Anmeldung: 24.09.2008
(73) Patentinhaber: ROBERT BOSCH GMBH, 70442 Stuttgart (DE)
(72) Erfinder: Uhlmannsiek, Dirk, 31275 Lehrte (DE); Möller, Rudolf, 30989 Gehrden (DE); Pfeifer, Hans Jürgen, 30890 Barsinghausen (DE)
(74) Vertreter: Kietzmann, Lutz

(56) Entgegenhaltungen:
- EP-A- 1 236 938
- DE-A1- 3 637 345
- GB-A- 1 122 393
- US-A- 2 462 544

## Beschreibung

Die vorliegende Erfindung betrifft ein Schieberventil mit einem Ventilgehäuse innerhalb welchem ein Paar benachbarter Schieberbohrungen vorgesehen sind, in denen Ventilschieber zum Schalten von Druckmittelflüssen zwischen Druckmittelanschlüssen axial bewegbar angeordnet sind, die über stirnseitige Steuerdruckbeaufschlagung betätigbar sind, wobei an einer gemeinsamen, der Steuerdruckbeaufschlagung gegenüberliegenden Stirnseite der Ventilschieber mechanische Koppelmittel zum Übertragen der Betätigungskraft zwischen den Ventilschiebern angeordnet sind.

Derartige Schieberventile kommen vornehmlich zum Schalten von Druckmittelflüssen innerhalb von Systemen der Hydraulik und Pneumatik zum Einsatz, um beispielsweise Pneumatikzylinder gesteuert mit Druckluft zu beaufschlagen oder zu entlüften. Daneben lässt sich die erfindungsgemäße Lösung auch für Regelventile einsetzen, welche einen vorgegebenen Druck am Arbeitsanschluss durch Be- oder Entlüftung ausregeln. Das Konstruktionsprinzip eines Schieberventils eignet sich ganz besonders zum Aufbau von kompakten Pneumatikventilen mit gleichzeitig maximalen Durchflussraten, wobei der Trend zu einer immer höheren Leistungsdichte geht.

Aus der EP 1 236 938 A1 geht ein gattungsgemäßes Schieberventil hervor, dessen Ventilgehäuse mit zwei benachbarten Schieberbohrungen zur Aufnahme zweier Ventilschieber ausgestattet ist. Allerdings lassen sich die beiden Ventilschieber nicht unabhängig voneinander durch entsprechende stirnseitige Steuerdruckbeaufschlagung betätigen. Die beiden Ventilschieber sind vielmehr an der der Steuerdruckbeaufschlagung gegenüberliegenden Stirnseite mit mechanischen Koppelmitteln zwangsgekoppelt. Dies bewirkt, dass bei stirnseitiger Steuerdruckbeaufschlagung eines der beiden Ventilschieber die hiervon ausgelöste Bewegung des Ventilschiebers über die mechanischen Koppelmittel zum anderen Ventilschieber weitergeleitet wird, der eine Bewegung in die entgegengesetzte Richtung ausführt. Je nach Beschaltung mit Steuerdruck oder stattdessen durch Einsatz einer Rückstellfeder lassen sich stabile und monostabile Ventilfunktionen umsetzen.

Nachteilig bei dieser technischen Lösung ist jedoch das Erfordernis mehrerer einzelner Bauteile. Die beweglichen Bauteile bestehen zumindest aus zwei Ventilschiebern und einem Wippeelement als mechanischem Koppelmittel, welches am Ventilgehäuse in einer Schwenklagerung zu halten ist. Entsprechend aufwendig stellt sich die Montage dieser einzelnen Bauteile dar und es bei der Fertigung sowie Montage ist darauf zu achten, dass kein Spalt zwischen den benachbarten beweglichen Bauteilen entsteht, welcher ansonsten die Schaltfunktion durch Totwege beeinträchtigen würde. Ferner ist mit dem hier realisierten Hebelgetriebe kein konstantes Übersetzungsverhältnis darstellbar und die Installation des Wippenelements erfordert einen entsprechenden Montageraum innerhalb des Ventilgehäuses, der für andere Funktionen nicht mehr nutzbar ist.

Es ist daher die Aufgabe der vorliegenden Erfindung ein Schieberventil mit zwei über mechanische Koppelmittel verbundenen Ventilschiebern zu schaffen, welches sich durch einen einfachen Aufbau, eine hohe Kompaktheit sowie hohe Montagefreundlichkeit auszeichnet.

Die Aufgabe wird ausgehend von einem Schieberventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass das mechanische Koppelmittel als ein biegeelastischer Schubstab ausgeführt ist, der in einem die beiden Schieberbohrungen miteinander verbindenden, im Wesentlichen U-förmigen Führungskanal des Ventilgehäuses geführt ist.

Der Vorteil der erfindungsgemäßen Lösung liegt darin, dass dank des U-förmigen Führungskanals relativ viel Bauraum innerhalb des Ventilgehäuses nutzbar bleibt für andere Funktionen, beispielsweise zur Integration weiterer ventilinterner Kanäle. Insgesamt ergibt sich somit ein recht kompakter Gesamtaufbau des erfindungsgemäßen Schieberventils mit einer hohen Leistungsdichte. Die Montage der bewegten Bauteile kann in denkbar einfacher Weise durch Aneinanderreihung innerhalb des durch die beiden Schieberbohrungen mit Führungskanal gebildeten durchgängigen Kanals erfolgen. Weiterhin bildet das erfindungsgemäße Schubstabprinzip die Vorraussetzung für ein konstantes Übersetzungsverhältnis der durch den Steuerdruck bewirkten Antriebskraft des Ventilschiebers.

Werden die bewegbaren Bauteile als Einzelbauteile ausgeführt, so sollten die beiden Enden des Schubstabes kugelförmig ausgebildet sein, um eine zentral punktuelle Anlage an der dem gegenüber ebenen Stirnseite korrespondierenden Ventilschieber zu schaffen. Hierdurch werden Reibungsverluste zwischen den aneinandergereihten einzelnen Bauteile während der Bewegung vermieden und es erfolgt eine exakte Kraftübertragung.

Gemäß einer anderen Alternative der Erfindung können die beiden Ventilschieber mit dem biegeelastischen Schubstab auch als einstückiges Bauteil ausgeführt werden. Soll deren Herstellung aus Kunststoff durch Spritzgießen erfolgen, so lassen sich während des Spritzgießprozesses die beiden Ventilschieber direkt je endseitig des Schubstabes mit anformen.

Gemäß einer anderen Ausführungsform der Erfindung wird vorgeschlagen, die beiden Ventilschieber als Flachschieber auszuführen, wobei der Schubstab an die flache Grundform der beiden Ventilschieber angepasst ist. Hierbei bietet es sich an, die als Flachschieber ausgeführten Ventilschieber mit sich hierin anschließenden flachem Schubstab ebenfalls einstückig, jedoch aus einem Blechstreifen herzustellen. Der Blechstreifen sollte vorzugsweise aus einem dünnen flexiblen und korrosionsfesten Stahlmaterial bestehen, der sich durch maschinelles Umformen und Stanzen leicht in die gewünschte Gestalt bringen lässt.

Zur Erhöhung der Gleiteigenschaften des biegeelastischen Schubstabes innerhalb des U-förmigen Führungskanals wird vorgeschlagen, dass der Schubstab entlang seiner Längserstreckung mehrere kugel- oder walzenartige Anformungen aufweist. Hierüber kommt der Schubstab nur punktuell beziehungsweise entlang einer Kontaktlinie mit der Wandung des Führungskanals in Berührung, woraus eine minimal Bauteilreibung resultiert. Alternativ hierzu können auch mehrere kugel-, nadel-, tonnen- oder walzenartige Wälzkörper vorgesehen werden, die im oder am Schubstab drehbar gelagert sind.

Zur Vereinfachung der Montage der bewegten Bauteile wird vorgeschlagen, dass die Querschnittsabmessungen der Schieberbohrungen den Querschnittsabmessungen des Führungskanals entsprechen. Dies bildet die Voraussetzung dafür, das sich bei der einstückigen Ausführung von Ventilschiebern mit Schubstab eine einfache Montage von einer Öffnungsseite des durch die Schieberbohrungen mit Führungskanal gebildeten Kanals bewerkstelligen lässt.

Im Rahmen der vorliegenden Erfindung besteht die Möglichkeit, die Längsachsen der beiden benachbarten Schieberbohrungen V-artig bis parallel zueinander innerhalb des Ventilgehäuses zu gestalten. Während bei der parallelen Variante der größtmögliche Kompaktheitsgrad für das Ventilgehäuse erzielt wird, erfordert die V-artige Variante demgegenüber kleinere Betätigungskräfte zur Bewegung der bewegten Bauteile, falls die Biegeelastizität des Schubstabes, beispielsweise auf Grund der Materialwahl, nicht ideal ist.

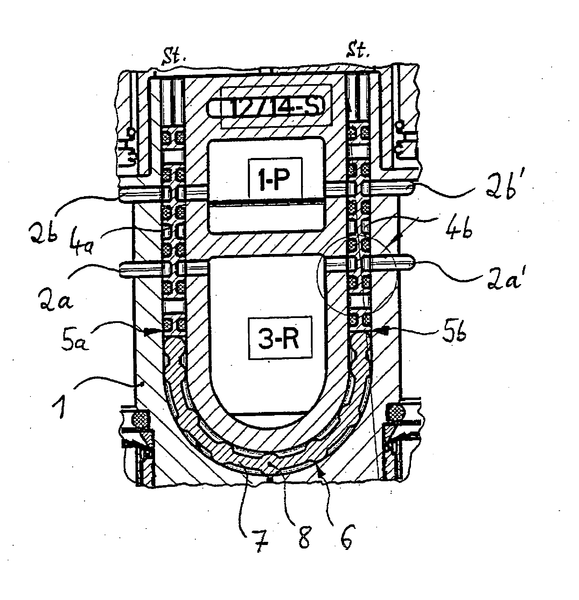

Weitere die Erfindung verbessernde Maßnahmen werden nachstehend gemeinsam mit der Beschreibung eines bevorzugten Ausführungsbeispiels der Erfindung anhand der einzigen Figur näher dargestellt. Die Figur zeigt einen Längsschnitt durch ein Ventilgehäuse eines Schieberventils.

Gemäß Figur besitzt das Ventilgehäuse 1 vier äußere Druckmittelanschlüsse 2a, 2b einerseits und 2a' sowie 2b' andererseits, die als Arbeitsanschlüsse je einen Ventilschieber 4a bzw. 4b zugeordnet sind. Die Speisedruckversorgung erfolgt über einen innerhalb des Ventilgehäuses 1 ausgebildeten Längskanalabschnitt 1'P, wogegen die Entlüftung über einen benachbart hierzu innerhalb des Ventilgehäuses 1 angeordnet Längskanalabschnitt 3-R erfolgt. In diesen beiden Längskanalabschnitten 1-P sowie 3-R münden die Druckmittelanschlüsse 3a und 3a' zur Entlüftung bzw. 3b, 3b' zur Steuerdruckbeaufschlagung. Die zwischen den vorgenannten Druckmittelanschlüssen wirkenden Ventilschieber 4a und 4b stellen jeweils Verbindung zwischen den innenliegenden Längskanalabschnitten 1-P und 3-R mit den außenliegenden Druckmittelanschlüssen 2a, 2b; 2a', 2b' her.

Die beiden Ventilschieber 4a und 4b sind innerhalb korrespondierender Schieberbohrungen 5a bzw. 5b des Ventilgehäuses 1 axial bewegbar angeordnet. Die beiden Schieberbohrungen 5a und 5b sind miteinander durch einen U-förmigen Kanal 6 verbunden, der ebenfalls im Ventilgehäuse 1 ausgeformt ist. Der U-förmige Führungskanal 6 beherbergt einen biegeelastischen Schubstab 7, der als mechanisches Koppelmittel dienend die beiden Ventilschieber 4a und 4b bewegungskoppelt. Somit bewirkt eine stirnseitige Druckbeaufschlagung des einen Ventilschiebers 4a eine entsprechend gerichtete Bewegung des Ventilschiebers 4a und eine entgegengesetzt hierzu gerichtete Bewegung des anderen Ventilschiebers 4b.

In diesem Ausführungsbeispiel ist der Schubstab 7 als ein separates Bauteil ausgeführt, welches endseitig kugelförmig ausläuft, um zentrale punktuelle Anlagen an den dem gegenüber ebenen Stirnseiten der korrespondierenden Ventilschieber 4a und 4b zu liefern. Der biegeelastische Schubstab 7 ist entlang seiner Längserstreckung mit mehreren - hier walzenartigen - Anformungen 8 versehen, so dass der Schubstab 7 lediglich entlang entsprechender Linien reibungsarm am Führungskanal 6 zur Anlage kommt.

Die Erfindung ist nicht beschränkt auf das vorstehend beschriebene bevorzugte Ausführungsbeispiel. Es sind vielmehr auch Abwandlungen hiervon denkbar, welche vom Schutzumfang der nachfolgenden Ansprüche Gebrauch machen. So können die bewegten Bauteile, bestehend aus den beiden Ventilschiebern mit Schubstab auch einstückig in Form eines einzigen Spritzgussteils aus Kunststoff oder alternativ dazu aus einem Blechstreifen hergestellt werden. Letzterenfalls bietet es sich besonders an, die Ventilschieber 4a und 4b als Flachschieber auszuführen und dem Schubstab ebenfalls eine flache Gestalt zu verleihen, so dass dieser sich flexibel an den U-förmigen Verlauf des Kanals anpassen kann.

### Bezugszeichenliste

- **1**: Ventilgehäuse
- **2**: Druckluftanschluss
- **3**: Druckluftanschluss
- **4**: Ventilschieber
- **5**: Schieberbohrung
- **6**: Führungskanal
- **7**: Schubstab
- **8**: Anformung

## Patentansprüche

1. Schieberventil mit einem Druckmittelanschlüsse (2a, 2b; 2a', 2b'; 3a, 3b; 3a', 3b') aufweisenden Ventilgehäuse (1), innerhalb welchem ein Paar benachbarter Schieberbohrungen (5a, 5b) vorgesehen sind, in denen Ventilschieber (4a; 4b) zum Schalten von Druckmittelflüssen zwischen den Druckmittelanschlüssen (2a, 2b; 2a', 2b'; 3a, 3b; 3a', 3b') axial bewegbar angeordnet sind, die über stirnseitige Steuerdruckbeaufschlagung betätigbar sind, wobei an einer gemeinsamen, der Steuerdruckbeaufschlagung gegenüberliegenden Stirnseite der Ventilschieber (4a, 4b) mechanische Koppelmittel zum Übertragen der Betätigungskraft zwischen den Ventilschiebern (4a, 4b) angeordnet sind, **dadurch gekennzeichnet, dass** die mechanischen Koppelmittel als ein biegeelastischer Schubstab (7) ausgeführt ist, der in einem die beiden Schieberbohrungen (5a, 5b) miteinander verbindenden U-förmigen Führungskanal (6) des Ventilgehäuses (1) geführt ist.

2. Schieberventil nach Anspruch 1,
**dadurch gekennzeichnet, dass** die beiden Enden des Schubstabes (7) kugelförmig ausgebildet sind, um eine zentral punktuelle Anlage an der demgegenüber ebenen Stirnseite der korrespondierenden Ventilschieber (4a, 4b) zu schaffen.

3. Schieberventil nach Anspruch 1,
**dadurch gekennzeichnet, dass** die beiden Ventilschieber (4a, 4b) als Kunststoffspritzgussteile ausgeführt sind, an denen der biegeelastische Schubstab (7) direkt angeformt ist, um ein einstückiges Bauteil zu bilden.

4. Schieberventil nach Anspruch 1,
**dadurch gekennzeichnet, dass** der Schubstab (7) zur Erhöhung der Gleiteigenschaften innerhalb des Führungskanals (6) entlang der Längserstreckung mehrere kugel- oder walzenartige Anformungen (8) aufweist.

5. Schieberventil nach Anspruch 1,
**dadurch gekennzeichnet, dass** der Schubstab (7) zur Erhöhung der Gleiteigenschaften innerhalb des Führungskanals (6) entlang der Längserstreckung mehrere kugel-, nadel-, tonnen- oder walzenartige Wälzkörper aufweist, die im oder am Schubstab (7) drehbar angeordnet sind.

6. Schieberventil nach Anspruch 1,
**dadurch gekennzeichnet, dass** die Querschnittsabmessungen der Schieberbohrungen (5a, 5b) den Querschnittsabmessungen des Führungskanals (6) entspricht.

7. Schieberventil nach Anspruch 1,
**dadurch gekennzeichnet, dass** die Ventilschieber (4a, 4b) als Flachschieber ausgeführt sind, wobei der Schubstab (7) an die flache Form der Ventilschieber (4a, 4b) angepasst ist.

8. Schieberventil nach Anspruch 7,
**dadurch gekennzeichnet, dass** die als Flachschieber ausgeführten Ventilschieber (4a, 4b) mit sich hieran anschließendem flachem Schubstab (7) einstückig aus einem Blechstreifen hergestellt sind.

9. Schieberventil nach einem der vorstehenden Ansprüche,
**dadurch gekennzeichnet, dass** die Längsachsen der beiden benachbarten Schieberbohrungen (5a, 5b) V-artig bis parallel zueinander im Ventilgehäuse (1) verlaufen.

10. Schieberventil nach einem der vorstehenden Ansprüche,
**dadurch gekennzeichnet, dass** die Druckmittelanschlüsse (3a, 3b; 3a', 3b') zur Speisedruckversorgung bzw. zur Entlüftung in je einen gemeinsamen innenliegenden Längskanalabschnitt (1-P bzw. 3-R) des Ventilgehäuses (1) münden.

11. Schieberventil nach einem der vorstehenden Ansprüche,
**dadurch gekennzeichnet, dass** die Druckmittelanschlüsse (2a, 2b; 2a', 2b') zum Anschluss von Arbeitsleitungen außen am Ventilgehäuse (1) angeordnet sind.

## Claims

1. A slide valve, comprising a valve housing (1) having pressure medium ports (2a, 2b; 2a', 2b'; 3a, 3b; 3a', 3b'), within which a pair of adjacent slide bores (5a, 5b) are provided, in which valve slides (4a; 4b) are axially moveably arranged for switching pressure medium flows between the pressure medium ports (2a, 2b; 2a', 2b'; 3a, 3b; 3a', 3b') operable by means of the application of a control pressure on the end face, wherein, on a common end face of the valve slides (4a, 4b), opposite that to which the control pressure is applied, mechanical coupling means are arranged for transmitting the operating force between the valve slides (4a, 4b), **characterised in that** the mechanical coupling means are formed as a resilient push rod (7) which is guided in a U-shaped guiding channel (6) of the valve housing (1) connecting the two slide bores (5a, 5b) with each other.

2. The slide valve according to claim 1,
**characterised in that** the two ends of the push rod (7) are spherically shaped to establish a central point-like engagement on the in contrast planar end face of the corresponding valve slides (4a, 4b).

3. The slide valve according to claim 1,
**characterised in that** the two valve slides (4a, 4b) are formed as injection moulded parts, on which the resilient push rod (7) is directly formed, to produce an integral part.

4. The slide valve according to claim 1,
**characterised in that** the push rod (7) has a plurality of spherical or roller-like bosses (8) along its longitudinal extension to improve the sliding properties within the guiding channel (6).

5. The slide valve according to claim 1,
**characterised in that** the push rod (7) has a plurality of spherical, needle-, barrel-, or roller-like rolling bodies that are rotatably arranged in or on the push rod (7) along its longitudinal extension to improve the sliding properties within the guiding channel (6).

6. The slide valve according to claim 1,
**characterised in that** the cross-sectional dimensions of the slide bores (5a, 5b) correspond to the cross-sectional dimensions of the guide channel (6).

7. The slide valve according to claim 1,
**characterised in that** the valve slides (4a, 4b) are configured as flat slides, wherein the push rod (7) is adapted to the flat shape of the valve slides (4a, 4b).

8. The slide valve according to claim 7,
**characterised in that** the valve slides (4a, 4b) configured as flat slides are integrally formed of a sheet metal strip together with the adjacent push rod (7).

9. The slide valve according to any one of the preceding claims,
**characterised in that** the longitudinal axes of the two adjacent slide bores (5a, 5b) run V-shaped to parallel with respect to each other within the valve housing (1).

10. The slide valve according to any one of the preceding claims,
**characterised in that** each of the pressure medium ports (3a, 3b; 3a', 3b') opens out into a common interior longitudinal channel section (1-P and 3-R, respectively) of the valve housing (1) for feed pressure supply and venting, respectively.

11. The slide valve according to any one of the preceding claims,
**characterised in that** the pressure medium ports (2a, 2b; 2a', 2b') are arranged on the outside of the valve housing (1) for the connection of working lines.

## Revendications

1. Vanne à tiroir comprenant un boîtier de vanne (1) comportant des raccords à fluide sous pression (2a, 2b ; 2a', 2b' ; 3a, 3b ; 3a', 3b') et à l'intérieur duquel sont prévus une paire d'alésages à tiroirs (5a, 5b) voisins, dans lesquels des tiroirs de vannes (4a ; 4b) pour commuter des écoulements de fluide sous pression entre les raccords à fluide sous pression (2a, 2b ; 2a', 2b' ; 3a, 3b ; 3a', 3b') sont agencés axialement déplaçables, et ceux-ci peuvent être actionnés par application d'une pression de commande sur le côté frontal, dans laquelle des moyens d'accouplement mécaniques destinés à transmettre la force d'actionnement entre les tiroirs de vannes (4a, 4b) sont agencés sur une face frontale commune, opposée à celle recevant la pression de commande, des tiroirs de vannes (4a, 4b),
**caractérisée en ce que** les moyens d'accouplement mécaniques sont réalisés sous forme d'une barre de poussée (7) élastique vis-à-vis de la flexion, qui est guidée dans un canal de guidage en forme de U (16), du boîtier de vanne (1), qui relie l'un à l'autre les deux alésages à tiroirs (5a, 5b).

2. Vanne à tiroir selon la revendication 1,
**caractérisée en ce que** les deux extrémités de la barre de poussée (7) sont réalisées en forme de sphère, afin de réaliser un contact ponctuel central sur la face frontale plane à l'opposé sur le tiroir de vanne correspondant (4a, 4b).

3. Vanne à tiroir selon la revendication 1,
**caractérisée en ce que** les deux tiroirs de vanne (4a, 4b) sont réalisés sous forme de pièces en matière plastique moulées par injection sur lesquelles la barre de poussée (7) élastique vis-à-vis de la flexion est conformée directement afin de former un composant d'une seule pièce.

4. Vanne à tiroir selon la revendication 1,
**caractérisée en ce que**, pour augmenter les propriétés de coulissement à l'intérieur du canal de guidage (6), la barre de poussée (7) présente le long de son extension longitudinale plusieurs conformations (8) en forme de sphères ou de cylindres.

5. Vanne à tiroir selon la revendication 1,
**caractérisée en ce que**, pour augmenter les propriétés de coulissement à l'intérieur du canal de guidage (6), la barre de poussée (7) présente le long de son extension longitudinale plusieurs corps de roulement en forme de billes, d'aiguilles, de tonneaux ou de cylindres, qui sont agencés en rotation sur la barre de poussée (7).

6. Vanne à tiroir selon la revendication 1,
**caractérisée en ce que** les dimensions de section transversale des alésages à tiroirs (5a, 5b) correspondent aux dimensions de section transversale du canal de guidage (6).

7. Vanne à tiroir selon la revendication 1,
**caractérisée en ce que** les tiroirs de vannes (4a, 4b) sont réalisés sous forme de tiroirs plats, et la barre de poussée (7) est adaptée à la forme plane des tiroirs de vannes (4a, 4b).

8. Vanne à tiroir selon la revendication 7,
**caractérisée en ce que** les tiroirs de vannes (4a, 4b) réalisés sous forme de tiroirs plats sont fabriqués, avec la barre de poussée plane (7) disposée à la suite, d'une seule pièce à partir d'une bande de tôle.

9. Vanne à tiroir selon l'une des revendications précédentes,
**caractérisée en ce que** les axes longitudinaux des deux alésages à tiroirs voisins (5a, 5b) s'étendent dans le boîtier de vanne (1) en formant un V ou parallèlement l'un à l'autre.

10. Vanne à tiroir selon l'une des revendications précédentes,
**caractérisée en ce que** les raccords à fluide sous pression (3a, 3b ; 3a', 3b') destinés à l'amenée d'une pression d'alimentation ou à la mise à l'air débouchent dans un tronçon de canal longitudinal respectif intérieur commun (1-P ou 3-R) du boîtier de vanne (1).

11. Vanne à tiroir selon l'une des revendications précédentes,
**caractérisée en ce que** les raccords à fluide sous pression (2a, 2b ; 2a', 2b') pour le raccordement de conduites de travail sont agencés à l'extérieur sur le boîtier de vanne (1).
